# NEUE EUROPÄISCHE PATENTSCHRIFT

(11) **EP 0 890 593 B2**
(45) Veröffentlichungstag und Bekanntmachung des Hinweises auf die Entscheidung über den Einspruch: **26.07.2006**
(45) Hinweis auf die Patenterteilung: 02.01.2003
(21) Anmeldenummer: 98110614.9
(22) Anmeldetag: 10.06.1998
(51) Int. Cl.: C08F 257/02, C08F 214/06, C08F 285/00, C08L 27/06

(54) **Acrylesterkautschukpartikel**
Particles of acrylic rubber
Particules de caoutchouc acrylique

(30) Priorität: 11.07.1997 DE 19729652
(43) Veröffentlichungstag der Anmeldung: 13.01.1999
(73) Patentinhaber: BASF Aktiengesellschaft, 67056 Ludwigshafen (DE)
(72) Erfinder: Lynch, John, Dr., 67590 Monsheim (DE); Görtz, Hans-Helmut, Dr., 67251 Freinsheim (DE); Nolte, Rainer, Dr., 67117 Limburgerhof (DE); Hahn, Susanne, Dr., 68165 Mannheim (DE); Elzer, Gunter, 68259 Mannheim (DE); Tschang, Chung-Ji, Dr., 67098 Bad Dürkheim (DE); Kröner, Hubertus, Dr., 67435 Neustadt (DE)

(56) Entgegenhaltungen:
- EP-A- 0 598 091
- WO-A-97/12921
- DE-A- 2 244 519
- GB-A- 1 355 861
- US-A- 3 657 172
- US-A- 3 660 529
- US-A- 3 763 279
- US-A- 4 145 380
- US-A- 5 053 441
- US-A- 5 116 901

## Beschreibung

Gegenstand der vorliegenden Erfindung sind Acrylesterkautschukdispersionen erhältlich durch Emulsionspolymerisation von Acrylsäureestern in Gegenwart eines vorgefertigten Saatlatex aus einem Polymer oder Polymergemisch mit einer Glastemperatur von >25°C und eines Emulgationsmittels in einer Konzentration von weniger als 1 Gew.% der Gesamtmasse der gebildeten Kautschukpartikel, wobei die Saatlatexpartikel einen mittleren Durchmesser von 20 bis 50 nm aufweisen und wobei der Anteil des einpolymerisierten Latexpartikel an der Gesamtmasse der gebildeten Kautschukpartikel 0,03 bis 0,5 Gew.-% beträgt und die kautschukpartikel der entstehenden Acrylester kautschukdispersion einem mittleren Teilchendurchmesser von 100 bis 400 nm aufweisen.

Weiterhin sind Gegenstand der vorliegenden Erfindung ein Verfahren zur Herstellung schiagfest-modifizierter PVC-Formmassen durch Suspensionspolymerisation von Vinylchlorid in Gegenwart solcher Acrylesterkautschukdispersionen, die Verwendung der Acrylesterkautschukdispersionen als Zusatz zur Suspensionspolymerisation von Vinylchlorid, die Verwendung der Acrylesterkautschukdispersionen als Kernpartikel bei der Herstellung von durch Pfropfpolymerisation umhüllten Partikeln sowie ein Verfahren zur Herstellung schlagfest-modifizierter PVC-Formmassen durch Einarbeitung der umhüllten Acrylatkautschukpartikel in PVC-Formmassen.

Zur Schlagfestmodifizierung von Polyvinylchlorid-Harzmassen werden in großem umfang Acrylesterkautschuke eingesetzt. Die Modifizlerung kann dabei so erfolgen, daß das Polyacrylat dem Suspensions-PVC-Harz bei dessen Herstellung durch Suspensionspolymerisation beigefügt wird. In diesem Fall wird der Acrylatkautschuk vorzugsweise als Dispersion der vinylchloridhaltigen Polymerisationsflotte beigefügt, wie es beispielsweise in DE-A-2111720 bekannt ist. Der Acrylatkautschuk kann aber auch dem Polyvinylchloridharz erst bei dessen Verarbeitung in fester Form zugesetzt werden. Derartige Schlagzähmodlfizierungsmittel auf Acrylester-Basis werden z.B. in EP-A-182 558 beschrieben. Für die genannte Anwendung sind auch Acrylesterkautschuke bekannt, welche mehrstufig aufgebaut sind und als erste Stufe einen Kern aus einem Polymeren mit hoher Glastemperatur, z.B. Polystyrol, enthalten. So werden in EP-A-548 762 Kautschukpartikel beschrieben, deren Kern aus Polystyrol besteht und 5-90 Gew.-% der Gesamtmasse der Partikel ausmacht. In DE-A-2107350 wurden ebenfalls dreistufige Acrylatkautschukpartikel beschrieben, deren Kern aus einem Emulsions(co)polymer aus Vinylchlorid, Methylmethacrylat, Mechacrylonitril und/oder Styrol besteht und wobei dieser Kern 0,5 bis 48,5 Gew.% der Gesamtmasse der Partikel ausmacht. Der Anteil des Kems an der Gesamtmasse von Kern und Acrylesterschicht beträgt hier 2 bis 95 Gew.-%.

Die genannten Acrylesterkautschuke werden alle durch sukzessiven Aufbau der Polymerschichten erhalten. Durch die Aneinanderreihung mehrerer schwerkontrollierbarer Polymerisationsschritte-besonders Emulsionspolymerisationen reagieren sehr empfindlich auf geringfügige Veränderungen der Reaktionsparameterwie Temperatur, 0 Viskosität und Rührgeschwindigkeit- weisen die so hergestellten Partikel meist eine unzureichende Reproduzierbarkeit, besonders hinsichtlich ihrer Größenverteilung auf.

Dervorliegenden Erfindung lag daher die Aufgabe zugrunde, Acrylesterkautschukdispersionen zur Verfügung zu stellen, die sich leicht In reproduzierbarer Weise herstellen lassen und dabei möglichst weitgehend die schlagzähmodifizierenden Eigenschaften des Acrylesterpolymeren zeigen.

Demgemäß wurden die eingangs beschriebenen Acrylesterkautschukdispersionen gefunden.

Weiterhin wurden ein Verfahren zur Herstellung schiagfest-modifizierter PVC-Formmassen durch Suspensionspolymerisation von Vinylchlorid in Gegenwart solcher Acrylesterkautschukdispersionen, die Verwendung derAcrylesterkautschukdispersionen als Zusatz zur Suspensionspolymerisation von Vinylchlorid, die Verwendung der Acrylesterkautschukdispersionen als Kernpartikel bei der Herstellung von durch Pfropfpolymerisation umhüllten Partikeln sowie ein Verfahren zur Herstellung schlagfest-modifizierter PVC-Formmassen durch Einarbeitung der umhüllten Acrylatkautschukpartikel in PVC-Formmassen gefunden.

Wesentlich für die vorliegende Erfindung ist, daß als Saatlatex ein vorgefertigter Saatlatex eingesetzt wird. Vorgefertigt heißt in diesem Zusammenhang, daß nach der Herstellung des Saatlatex - zumindest die Größenverteilung der Saatlatexpartikel analytisch ermittelt wird, so daß die Verwendung eines Saatlatex mit der gewünschten Größenverteilung und dem gewünschten mittleren Partikeldurchmesser gewährleistet werden kann.

Die Saatlatexpartikel haben einen mittleren Durchmesser von 20 - 50 nm, vorzugsweise von 25 bis 35 nm. Neben der mittleren Teilchengröße ist auch die Einheitlichkeit der Saatlatexpartikel von Bedeutung. Angestrebt werden Latices mit möglichst enger Teilchendurchmesserverteilung.

Als Saatlatex können verschiedene Polymere und Copolymere mit einer Glastemperatur oberhalb von 25°C eingesetzt werden. In Betracht kommen z.B. Latices aus PVC, Polystyrol, Polymethylmethacrylat, Polymethacrylonitril oder aus Copolymeren der diesen Po-lymeren zugrunde liegenden Monomeren miteinander oder mit Comonomeren wie Vinylacetat, Ethylacrylat, Acrylnitril, 2-Methylstyrol oderanderen Vinylcomonomeren. Besonders bevorzugtwerden als Saatlatex Polystyrolpartikel eingesetzt.

Die erfindungsgemäßen Acrylesterkautschukdispersionen enthalten Partikel, deren Hauptantell aus Acrylsäureesterpolymerisaten besteht und deren Kautschukpartikel einem mittleren Teilchendurchmesser von 100 bis 400 nm aufweisen. Unter Acrylsäureesterpolymerisaten sollen dabei Polymerisate verstanden, die im wesentlichen aus Acrylestermonomeren aufgebaut werden, in untergeordneten Mengen jedoch auch noch andere Comonomere enthalten können. Als Acrylsäureester sind beispielsweise Acrylsäurealkylester, die 3 bis 10 C-Atome im Alkylrest enthalten, geeignet, wie Propylacrylat, Butylacrylat, Pentylacrylat, Hexylacrylat, Heptylacrylat, Octylacrylat, 2-Ethylhexylacrylat, Nonylacrylat oder Decylacrylat, ferner Acrylsäurearylalkylester wie Benzyl-, Phenylethyl- oder Phenylpropylester. Geeignet sind auch solche Acrylalkylester, bei denen die Kohlenstoffkette durch Ethersauerstoffatome unterbrochen ist, wie Acrylsäurephenoxyethylester. Bevorzugt werden solche Acrylester eingesetzt, deren Homopolymerisate eine Glasumwandlungstemperatur von höchstens -15°C zeigen. Es können auch Mischungen verschiedener Acrylsäureester verwendet werden.

Geeignete, mit Acrylsäureestern copolymerisierbare Monomere sind beispielsweise Styrol, Acrylnitril, Isopren, Butadien, Vinylacetat, Methacrylsäurealkylester mit 1 bis 8 C-Atomen in der Alkylgruppe, Acrylsäure, Methacrylsäure und andere übliche Vinylmonomere. Bevorzugt wird als Comonomeres Butadien oder Isopren verwendet. Die Menge des beziehungsweise der mit dem Acrylsäureester copolymerisierbaren Monomeren soll so gewählt werden, daß das erzeugte Acrylsäureestercopolymerisat eine Glasumwandlungstemperatur unterhalb 0°C aufweist.

Die Emulsionspolymerisation des Acrylsäureesters erfolgt unter Zusatz eines Monomeren mit mindestens zwei ethylenisch ungesättigten, nicht konjugierten Doppelbindungen. Solche geeigneten Verbindungen sind beispielsweise Acrylate mehrwertiger Alkohole, wie Ethylenglykoldimethacrylat, Diethylenglykoldimethacrylat, Propylenglykoldimethacrylat, Butandiol-1,4-diacrylat, Trimethylenglykoldiacrylat, Pentamethylenglykoldiacrylat, Glyceryltriacrylat, Trimethylolpropantrimethacrylat, Pentaerythrittetraacrylat; Alkylmethacrylat, Diallylester von mono- beziehungsweise polyfunktionellen Säuren, wie Diallylphthalat, Diallylfumarat; Divinylestervon zwei oder dreibasigen Säuren, wie Divinyladipat; Divinylether von mehrwertigen Alkoholen, beispielsweise vom Ethylenglykol; Divinylbenzol oder Divinylsulfon. Von diesen Verbindungen mit zwei nicht konjugierten ethyle-nischen Doppelbindungen werden 0,1 bis 5 Gew.-%, bezogen auf die acrylsäureesterhaltige Monomerenmischung, für die Emulsionspolymerisation eingesetzt.

Die Polymerisation in wäßriger Emulsion findet in Gegenwart von mindestens einem wasserlöslichen Emulgationsmittel, vorzugsweise einem Salz einer 12 bis 18 C-Atome enthaltenden Fettsäure, einer C₁₂-C₁₈-Alkylsulfonsäure, einer C₁₂-C₁₈-Alkylbenzolsulfonsäure oder einer dodecylierten Diphenylethersulfonsäure statt. Das Salz sollte mindestens zu 0,5 Gew.-% in Wasser bei 20°C löslich sein, vorzugsweise werden die Natrium-, Kalium- oder Ammoniumsalze eingesetzt. Geeignet sind beispielsweise die Laurate, Myristate, Palmitate, Isopalmitate oder Stearate, wobei auch Mischungen verschiedener fettsaurer Salze verwendet werden können.

Die Emulgationsmittelkonzentration während der Emulsionspolymerisation zur Herstellung, der Acrylesterkautschukdispersionen beträgt im allgemeinen 0,1 bis 1, vorzugsweise 0,15 - 0,5 Gew.-% der Gesamtmasse der gebildeten Kautschukpartikel. Diese niedrigen Emulgationsmittelkonzentrationen sind vorteilhaft, weil dadurch die Dispersionen nur wenig Emulgatoren enthalten und auch leicht von Emulgatorresten befreit werden können.

Weiterhin kann der Emulgator bei der späteren PVC-Herstellung durch Suspensionspolymerisation wegen seiner Tendenz zur Schaumbildung stören und auch die Eigenschaften der PVC-Formmasse ungünstig beeinflussen.

In den üblichen Eintopfverfahren zur Herstellung mehrschichtiger Kautschukpartikel werden dagegen meist höhere Emulgationsmittelkonzentrationen eingestellt, um eine ausreichende Partikelbildung bei der Emulsionspolymerisation zur Herstellung des Partikelkerns zu erreichen.

Die Emulsions polymerisation der Acrylester und gegebenenfalls zusätzlicher Monomere wird ansonsten unter üblichen Bedingungen, wie sie dem Fachmann vertraut sind, durchgeführt.

Als Katalysator oder Initiator für die Emulsionspolymerisation werden 0,05 bis 1 Gew.%, vorzugsweise 0,15 bis 0,5 Gew.%, bezogen auf das acrylsäureesterhaltige Monomerengemisch, von üblichen peroxidischen Verbindungen wie Wasserstoffperoxid, Kalium-, Natrium- oder Ammoniumpersulfat oder von Azokatalysatoren verwendet. Zusammen mit den wasserlöslichen peroxidischen Verbindungen können wasserlösliche reduzierende Verbindungen, die zum Aufbau eines Redox-Katalysatorsystems geeignet sind, eingesetzt werden. Geeignet sind beispielsweise Alkalibisulfite, -hydrosulfite, -thiosulfate, -aldehydsulfoxylate sowie auch organische reduzierende Verbindungen, beispielsweise Ascorbinsäure.

Die Polymerisationstemperatur beträgt im allgemeinen 60 - 95°C, vorzugsweise 70 - 90°C. Als vorteilhaft hat sich außerdem die kontinuierliche Zugabe einer wässrigen Monomeren/Comonomeren-Emulsion zu der Dispersion enthaltend den Saatlatex und das Katalysator/Initiatorsystem erwiesen.

Der Monomerengehaft wird so gewählt, daß der Anteil der einpolymerisierten Latexpartikel an der Gesamtmasse der gebildeten Kautschukpartikel 0,03 bis 0,5 Gew.% beträgt. Vorzugsweise wird der Monomerengehalt so gewählt, daß die Kautschukpartikel der entstehenden Acrylesterkautschukdispersion einen mittleren Teilchendurchmesser von 100 bis 400 mm, besonders bevorzugt von 170 bis 300 mm, aufweisen.

Die auf diese Weise erhältlichen Acrylesterkautschukdispersionen lassen sich auf verschiedene Art zur Schlagfestausnistungvon PVC-Formmassen einsetzen. Dabei kann die Schlagfestmodifizierung entwederschon während der Vinylchloridpolymerisation vorgenommen werden, odersie kann nach der Polymerisation bei der Verarbeitung des PVC erfolgen.

So ist Gegenstand der vorliegenden Erfindung ein Verfahren zur Herstellung schlagfest-modifizierter PVC-Formmassen durch Suspensionspolymerisation, welches dadurch gekennzeichnet ist, daß die Suspensionspolymerisation von Vinylchlorid in Gegenwart der oben beschriebenen Acrylesterkautschukdispersionen vorgenommen wird. Die Verwendung der Acrylesterkautschukdispersionen als solchen schlagfestmodifizierenden Zusatz zur Suspensionspolymerisation von Vinylchlorid ist besonders vorteilhaft.

Hierbei wird erfindungsgemäß im allgemeinen so vorgegangen, daß Wasser, Suspendiermittel, gegebenenfalls Fällungsmittel für die weiter oben beschriebenen Emulgatoren, Katalysatoren, gegebenenfalls weitere Zusatzstoffe, sowie Vinylchlorid und gegebenenfalls weitere Monomere, die mit Vinylchlorid copolymerisierbar sind, im Polymerisationsgefäß vorgelegt werden und danach die, wie oben beschrieben hergestellte, wäßrige Dispersion des Polyacrylsäureesters unter Bewegung der Mischung, beispielsweise durch Rühren, zugegeben wird. Hierbei kann die Reihenfolge, in der das Vinylchlorid beziehungsweise das Vinylchlorid enthaltende Monomerengemisch, das Wasser, Suspendiermittel, Fällungsmittel und der Katalysator eingespeist werden, variieren. Vor, während oder nach dieser Zugabe wird die Mischung auf die Polymerisationstemperatur von 50 bis 80°C erwärmt und wie üblich unter Rühren bis zu einem Druckabfall um mindestens 0,1 MPa polymerisiert. Der Polymerisationsumsatz sollte 45 bis 90 Gew.-%, vorzugsweise 75 bis 87 Gew.-%, bezogen auf eingesetztes Vinylchloridmonomeres, betragen.

Neben Vinylchlorid können bei der Suspensionspolymerisation bis zu 10 Gew.-% der Gesamtmenge der eingesetzten Monomeren mit Vinylchlorid copolymerisierbare Monomere eingesetzt werden. Hierfür sind beispielsweise eines oder mehrere folgender Monomerer geeignet: Vinylester von geradkettigen oderverzweigten Carbonsäuren mit 2 bis 20, vorzugsweise 2 bis 4 Kohlenstoffatomen, wie Vinylacetat, -propionat, -butyrat, -2-ethylhexanoat; Vinylisotridecansäureester; Vinylidenchlorid; Vinylether; ungesättigte Säuren, wie Malein-, Fumar-, Acryl-, Methacrylsäure und deren Mono- beziehungsweise Diester mit aliphatischen Alkoholen mit 1 bis 10 Kohlenstoffatomen; Maleinsäureanhydrid, Maleinsäureimid sowie dessen N-Substitutionprodukte mit aromatischen, cycloalophatischen sowie gegebenenfalls verzweigten aliphatischen Substituenten; Acrylnitril; Styrol. Besonders bevorzugt als Comonomere sind Vinylacetat und Methacrylsäureester mit 1 bis 8 C-Atomen in der alkoholischen Komponente;

Als Suspendiermittel werden 0,01 bis 0,5 Gew.-%, vorzugsweise 0,02 bis 0,2 Gew.-%, bezogen auf das (die) bei der Suspensionspolymerisation eingesetzte(n) Monomere(n) verwendet. Geeignet sind eines oder mehrere der folgenden Suspendiermittel: Cellulosederivate, wie Alkyl- und Hydroxyaikyicellulosen; beispielsweise Methyl- oder Ethylcellulose sowie Hydroxyethyl- oder Hydroxypropylcellulose sowie deren Mischether, wie Hydroxypropylmethylcellulose; Alkylvinylether-Maleinsäurecopolymerisate; Gelatine; Stärkeether. Weiterhin können als Suspendiermittel Polyvinylalkohole mit einem Hydrolysegrad von > 50, vorzugsweise > 70 mol.-% eingesetzt werden, in geringeren Anteilen auch weniger hydrolysierte Polyvinylalkohole. Der pH-Wert der vor der Polymerisation erzeugten Mischung aus Wasser, Suspendiermittel und gegebenenfalls Fällungsmittel für die bei der Emulsionspolymerisation des Acrylsäurealkylesters eingesetzten Emulgatoren wird auf einen Wert unterhalb 9 eingestellt.

Die Suspensionspolymerisation wird in Gegenwart von 0,001 bis 3 Gew.-%, vorzugsweise 0,01 bis 0,3 Gew.-%, bezogen auf eingesetzte(s) Monomere(s), in Vinylchlorid löslicher radikalbildender Katalysatoren durchgeführt. Geeignete Katalysatoren sind beispielsweise Diaryl-, Diacylperoxide, wie Diacetyl-, Acetylbenzoyl-, Di-lauroyl-, Dibenzoyl-, Bis-2,4-dichlorbenzoyl-, Bis-2-methylbenzoyl-peroxid; Dialkylperoxyde, wie Di-tertiär-butylperoxid, Perester, wie Tertiär-butylperneodecanoat, Tertiärbutylperacetat, Tertiär-butylperpivalat; Dialkylperoxy-dicarbonate, wie Diisopropyl-, Di-2-ethylhexyl-, Dicyclohexyl-, Diethylcyclohexylperoxy-dicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril.

Wenn bei der oben beschriebenen Suspensionspolymerisation von Vinylchlorid in Gegenwart der vorpolymerisierten Polyacrylsäureesterdispersion der gewünschte Monomerenumsatz erreicht ist, wird der Ansatz abgekühlt, nach üblichen Verfahren von restlichen Monomeren befreit, die wäßrige Flotte, beispielsweise in einer Dekanterzentrifuge, abgetrennt und das feuchte Polymerisat wie üblich, beispielsweise in einem Stromtrockner oder Wirbelbetttrockner, getrocknet.

Die erfindungsgemäßen Acrylesterkautschukdispersionoen lassen sich auch zur Schlagfestmodifizierung vorgefertigter PVC-Formmassen verwenden. Aufgrund der meist niedrigen Erweichungstemperatur der Acrylesterschicht ist es jedoch dazu meist erforderlich, die Kautschukpartikel mit einer weiteren Hülle zu versehen. So lassen sich die erfindungsgemäßen Acrylesterkautschukdispersionen als Kernpartikel bei der Herstellung von durch Pfropfpolymerisation umhüllten Partikeln verwenden, wobei die umhüllende Polymerschicht vorzugsweise eine Glastemperatur von >25°C aufweist.

Die Pfropfpolymerisation zur Umhüllung der weichen Kautschukpartikel kann unter Reaktionsbedingungen, wie sie zum Aufbau der Acrylesterkautschukschicht genannt wurden, erfolgen. Dabei eignen sich als Monomere all die Monomereinheiten, wie sie auch zum Aufbau der Saatlatexpartikel geeignet sind. Als besonders geeignet haben sich umhüllte Acrylesterkautschukpartikel erwiesen, deren umhüllende Polymerschicht im wesentlichen aus vernetztem Acrylat oder Methacrylat besteht. Die auf diese Weise umhüllten Kautschukpartikel sind im Gegensatz zu den nichtumhüllten Kautschukpartikeln weniger klebrig und eignen sich besserzur Einarbeitung in vorgefertigte PVC-Formmassen. Eine Ausführungsform der vorliegenden Erfindung ist daher ein Verfahren zur Herstellung schlagfest-modifizierte PVC-Formmassen, welches dadurch gekennzeichnet ist, daß man in PVC-Formmassen die beschriebenen umhüllten Acrylesterkautschukpartikel einarbeitet. Das Einarbeiten kann durch übliche Verarbeitungsschritte wie Extrudieren, Kalandrieren im Spritzgußverfahren oder nach anderen bekannten Verarbeitungsverfahren erfolgen.

Die erfindungsgemäßen Acrylsaäureesterkautschukdispersionen las-sen sich mit hoher Reproduzierbarkeit herstellen. Sie zeigen äußerst geringe Chargenvariation hinsichtlich ihrer Größe und weisen eine sehr homogene Größenverteilung auf, weshalb sie zur Schlagfestmodifizierung von PVC-Formmassen besonders geeignet sind.

Die folgenden Beispiele erläutern die Erfindung

### Beispiel 1

In einer beheizbaren 2-1-Rührapparatur, die mit geeigneten Dosiervorrichtungen ausgestattet war, wurden 358 g vollentsalztes Wasser, 0,8 g Natriumpyrophosphat, 0,8 g Natriumperoxodisulfat und 0,96 g eines Polystyrol-Saatlatex vorgelegt. Der Saatlatex hatte eine Teilchengröße von 30 nm und einen Feststoffgehalt von 33,6 Gew.-%. Die Vorlage wurde unter Rühren auf 80°C aufgeheizt und dann innerhalb von 3 h aus einem gerührten Zulaufgefäß eine Mischung zudosiert bestehend aus 230 g vollentsalztem Wasser, 10 g einer 1 gew.-%igen Natriumlauratlösung, 390 g 2-Ethylhexylacrylat, 8 g Isopren und 2 g Butandiol-1,4-diacrylat. Nach Zulaufende wurde noch 2 h auf 80°C gehalten und dann gekühlt. Die erhaltene Kautschukdispersion hatte einen Feststoffgehalt von 38,9 %, einen pH-Wert von 7,6 und einen Lichtdurchlässigkeits (LD-) Wert von 44 %, entsprechend einer Latexteilchengröße von 300 nm. Auf den Kautschuk bezogen enthielt das Produkt 0,25 % Emulgator.

### Beispiel 1a-1h

Die Herstellung der Kautschukdispersion laut Beispiel 1 wurde 8 mal unter gleichen Bedingungen wiederholt, um die Reproduzierbarkeit der Teilchengrößeneinstellung zu überprüfen. Als Maß dafür diente der LD-Wert der Dispersion.

| | | | | | | | | |
|---|---|---|---|---|---|---|---|---|
| Beispiel | 1a | 1b | 1c | 1d | 1e | 1f | 1g | 1h |
| LD-Wert | 46 | 45 | 46 | 46 | 46 | 45 | 45 | 46 |

### Beispiel 2

Unter den Bedingungen von Beispiel 1, jedoch mit Vorlage von 2,98 g des Polystyrol-Saatlatex, wurde eine Polymerisation durchgeführt.

Die erhaltene Kautschukdispersion hatte einen Feststoffgehalt von 39,8 %, einen pH-Wert von 7,2 und einen LD-Wert von 63 %, entsprechend einer Latexteilchengröße von 220 nm. Auf den Kautschuk bezogen enthielt das Produkt 0,25 % Emulgator.

### Beispiel 3

Analog zu Beispiel 2 wurde unter Vorlage von 4,76 g des Polystyrol-Saatlatex polymerisiert. Die erhaltene Kautschukdispersion hatte einen Feststoffgehalt von 40,0 %, einen pH-Wert von 7,3 und einen LD-Wert von 72 %, entsprechend einer Latexteilchengröße von 160 nm. Auf den Kautschuk bezogen enthielt das Produkt 0,25 % Emulgator.

### Beispiel 4

Analog zu Beispiel 2 wurde unter Vorlage von 2,4 g des Polystyrol-Saatlatex polymerisiert. Die erhaltene Kautschukdispersion hatte einen Feststoffgehalt von 39,7 %, einen pH-Wert von 7,2 und einen LD-Wert von 64 %, entsprechend einer Latexteilchengröße von 230 nm. Auf den Kautschuk bezogen enthielt das Produkt 0,25 % Emulgator.

### Beispiel 5a - 5d

In einem beheizbaren Rührautoklaven wurden unter Rühren 1200 g vollentsalztes Wasser, 5,25 g Natriumtripolyphosphat, 23,3 g einer 3 gew.-% wäßrigen Lösung von Hydroxypropylmethylcellulose, 14 g einer 4 gew.-%igen wäßrigen Lösung eines teilverseiften Polyvinylalkohois (verseifungsgrad 88 %; Viskosität der 4 %igen Lösung: 40 mPa·s), 0,88 g einer 40 gew.-%igen wäßrigen Lösung eines teilverseiften Poly-vinylalkohols (Verseifungsgrad 55 %; Viskosität der 40 %igen Lösung 800 mPa·s), 96 g der entsprechenden Kautschukdispersion (Beispiel 1 - 4) und 0,29 g tert.-Butyperneodecanoat vorgelegt. Nach Zugabe von 770 ml flüssigem Vinylchlorid wurde unter Rühren mit 250 upm auf 60°C aufgeheizt und bei dieser Temperatur solange polymerisiert, bis der Druck (ca. 10 bar) um 2 bar abgefallen war (ca. 3½ h). Danach wurde entspannt und das restliche Vinylchlorid im Vakuum entfernt. Anschließend wurde das entstandene Polymerisat abfiltriert und im Vakuum getrocknet.

### Beispiel 6

In einer beheizbaren 2-1-Rührapparatur, die mit geeigneten Dosiervorrichtungen ausgestattet war, wurden 325 g vollentsalztes Wasser, 0,25 g Natriumpersulfat, und 3,33 g eines Polystyrol-Saatlatex vorgelegt. Der Saatlatex hatte eine Teilchengröße von 30 nm und einen Feststoffgehalt von 33,6 Gew.%

Dann wurde auf 85°C aufgeheizt und bei dieser Temperatur eine Lösung von 0,75 g Natriumpersulfat in 75 ml vollentsalztem Wasser innerhalb von 4,5 h zudosiert. Parallel dazu wurde eine Mischung, bestehend aus 392 g n-Butylacrylat, 8 g Butandiol-1,4-diacrylat, 0,8 g Natriumpyrophosphat, 4 g Dodecyliertem Biphenylsulfonsäure Natriumsalz und 160 g vollentsalztem Wasser, innerhalb von 2 h zudosiert. Nach einer Wartezeit von 30 min wurde eine Mischung, bestehend aus 42,4 g Styrol, 36,8 g Methylmethacrylat, 0,8 g Butandiol-1,4-diacrylat, 0,16 g Natriumpyrophosphat, 0,8 g Dodecyliertem Diphenylethersulfonsäure Natriumsalz und 32 g vollentsalztem Wasser innerhalb von 45 min zudosiert. Nach weiteren 30 min Wartezeit wurde eine Mischung, bestehend aus, 19,8 g Methylmethacrylat, 0,2 g Butandiol-1,4-diacrylat, 0,04 g Natriumpyrophosphat, 0,2 g Dodecyliertem Diphenylethersulfonsäure Natriumsalz und 8 g VE-Wasser innerhalb 15 min zudosiert und noch 30 min auf Temperatur gehalten. Danach wurde gekühlt. Die erhaltene Dispersion hatte einen Feststoffgehalt von 45,2 Gew.-%, einen pH-Wert von 7,1 und einen LD-Wert von 64. Der Kautschuk wurde durch Gefrieren ausgefällt, abfiltriert und im Vakuum getrocknet.

7 Teile des Festkautschuks wurden mit 93 Teilen S-PVC vom K-Wert 65, 6,9 Teilen eines handelsüblichen Stabilisator- und Additiv-Paketes (bestehend im wesentlichen aus zweibasischem Bleiphosphit, zweibasischem Bleistearat, neutralem Bleistearat, Kalziumstearat, Gleitmitteln auf Paraffin- und Esterbasis, Antioxidantien und Plastifizierhilfsmittel auf Polyacrylatbasis), 6 Teilen Kreide (Hydrocarb® 95 T, Hersteller Omya) und 4 Teilen Titandioxid unter üblichen Bedingungen zu Prüfkörpern verarbeitet.
Die Thermostabilität bei 200°C nach ISO 182-2 betrug 135 min, die Doppel-V-Kerbschlagzähigkeit nach DIN 53753 bei einem Kerbradius von 0,1 mm betrug bei 23°C 21,1 kJ/m², bei 0°C 6,8 kJ/m².

## Patentansprüche

1. Acrylesterkautschukdispersionen erhältlich durch Emulsionspolymerisation von Acrylsäureestern in Gegenwart eines vorgefertigten Saatlatex aus einem Polymer oder Polymergemisch mit einer Glastemperatur von >25°C und eines Emulgationsmittels in einer Konzentration von weniger als 1 Gew.-% der Gesamtmasse der gebildeten Kautschukpartikel, wobei die Saatlatexpartikel einen mittleren Durchmesser von 20 bis 50 nm aufweisen und wobei der Anteil der einpolymerisierten Latexpartikel an der Gesamtmasse der gebildeten Kautschukpartikel 0,03 bis 0,5 Gew.-% beträgt und die Kautschukpartikel der entstehenden Acrylesterkautschukdispersion einen mittleren Teilchendurchmesser von 100 bis 400 nm aufweisen.

2. Acrylesterkautschukdispersionen nach Anspruch 1, **dadurch gekennzeichnet, daß** der Saatlatex einen mittleren Teilchendurchmesser von 25 bis 35 nm aufweist.

3. Acrylesterkautschukdispersionen nach Anspruch 1 oder 2, **dadurch gekennzeichnet, daß** als Saatlatex Polystyrolpartikel eingesetzt werden.

4. Acrylesterkautschukdispersionen nach den Ansprüchen 1 bis 3, **dadurch gekennzeichnet., daß** die Emulgationsmittelkonzentration während der Emulsionspolymerisation zu ihrer Herstellung 0,15 bis 0,5 Gew.-% der Gesamtmasse der gebildeten Kautschukpartikel beträgt.

5. Verfahren zur Herstellung schlagfest-modifizierter PVC-Formmassen durch Suspensionspolymerisation, **dadurch gekennzeichnet, daß** die Suspensionspolymerisation von Vinylchlorid in Gegenwart von Acrylesterkautschukdispersionen gemäß den Ansprüchen 1 bis 4 vorgenommen wird.

6. Verwendung von Acrylesterkautschukdispersionen gemäß den Ansprüchen 1 bis 4, als Zusatz zur Suspenionspolymerisation von Vinylchlorid

7. Verwendung von Acrylesterkautschukdispersionen gemäß den Ansprüchen 1 bis 4 als Kernpartikel bei der Herstellung von durch Pfropfpolymerisation umhüllten Partikeln, wobei die umhüllende Polymerschicht eine Glastemperatur >25°C aufweist.

8. Verwendung von Acrylesterkautschukpartikeln nach Anspruch 7, **dadurch gekennzeichnet, daß** die umhüllende Polymerschicht im wesentlichen aus vernetztem Acrylat oder Methacrylat besteht.

9. Verfahren zur Herstellung schlagfest-modifizierte PVC-Formmassen, **dadurch gekennzeichnet, daß** man in PVC-Formmassen umhüllte Acrylatkautschukpartikel gemäß den Ansprüchen 7 oder 8 einarbeitet.

## Claims

1. An acrylate rubber dispersion obtainable by emulsion polymerization of acrylates in the presence of a previously prepared seed latex made of a polymer or polymer mixture with a glass transition temperature > 25°C and of an emulsifier at a concentration of less than 1% by weight of the entire weight of the rubber particles formed, where the seed latex particles have an average diameter of from 20 to 50 nm, and where the proportion of the latex particles incorporated into the polymer, based on the entire weight of the rubber particles formed, is from 0.03 to 0.5% by weight and the rubber particles of the resulting acrylate rubber dispersion have an average particle diameter of from 100 to 400 nm.

2. The acrylate rubber dispersion according to claim 1, wherein the seed latex has an average particle diameter of from 25 to 35 nm.

3. The acrylate rubber dispersion according to claim 1 or 2, wherein polystyrene particles are used as seed latex.

4. The acrylate rubber dispersion according to any of claims 1 to 3, wherein the emulsifier concentration during the emulsion polymerization to prepare the dispersion is from 0.15 to 0.5% by weight of the entire weight of the rubber particles formed.

5. A process for preparing impact-modified PVC molding compositions by suspension polymerization, which comprises undertaking the suspension polymerization of vinyl chloride in the presence of the acrylate rubber dispersion according to any of claims 1 to 4.

6. The use of the acrylate rubber dispersion according to any of claims 1 to 4 as an additive to the suspension polymerization of vinyl chloride.

7. The use of the acrylate rubber dispersion according to any of claims 1 to 4 as core particles in the preparation of particles sheathed by graft polymerization, where the sheathing polymer layer has a glass transition temperature > 25°C.

8. The use of acrylate rubber particles according to claim 7, wherein the sheathing polymer layer is substantially composed of crosslinked acrylate or methacrylate.

9. A process for preparing impact-modified PVC molding compositions, which comprises incorporating sheathed acrylate rubber particles according to claim 7 or 8 into PVC molding compositions.

## Revendications

1. , Dispersions de caoutchouc d'ester acrylique, que l'on peut obtenir par polymérisation en émulsion d'esters d'acide acrylique en présence d'un latex de semence préalablement fabriqué à base d'un polymère ou d'un mélange de polymères présentant une température de transition vitreuse > 25°C et d'un agent émulsifiant en une concentration de moins de 1% en poids de la masse totale des particules de caoutchouc formées, où les particules de latex de semence présentent un diamètre moyen de 20 à 50 nm, la fraction des particules de latex copolymérisées par rapport à la masse totale des particules de caoutchouc formées est de 0,03 à 0,5% en poids, et les particules de caoutchouc de la dispersion de caoutchouc d'ester acrylique formée présentent un diamètre moyen de particule de 100 à 400 nm.

2. Dispersions de caoutchouc d'ester acrylique selon la revendication 1, **caractérisées en ce que** le latex de semence présente un diamètre moyen des particules de 25 à 35 nm.

3. Dispersions de caoutchouc d'ester acrylique selon la revendication 1 ou 2, **caractérisées en ce que** l'on met en oeuvre en tant que latex de semence des particules de polystyrène.

4. Dispersions de caoutchouc d'ester acrylique selon les revendications 1 à 3, **caractérisées en ce que** la concentration d'agent émulsifiant pendant la polymérisation en émulsion pour leur préparation est de 0,15 à 0,5% en poids de la masse totale des particules de caoutchouc formées.

5. Procédé de préparation de masses de moulage en PVC modifié à haute résistance au choc par polymérisation en suspension, **caractérisé en ce que** la polymérisation en suspension de chlorure de vinyle est entreprise en présence de dispersions de caoutchouc d'ester acrylique selon les revendications 1 à 4.

6. Utilisation de dispersions de caoutchoucs d'ester acrylique selon les revendications 1 à 4, en tant qu'additifs pour la polymérisation en suspension de chlorure de vinyle.

7. Utilisation de dispersions de caoutchouc d'ester acrylique selon les revendications 1 à 4, en tant que particules de noyau lors de la préparation de particules enrobées par polymérisation par greffage, où la couche polymère d'enrobage présente une température de transition vitreuse >25°C.

8. Utilisation de particules de caoutchouc d'ester acrylique selon la revendication 7, **caractérisée en ce que** la couche de polymère d'enrobage consiste essentiellement en acrylate ou en méthacrylate réticulé.

9. Procédé de préparation de masses de moulage de PVC modifié à haute résistance au choc, **caractérisé en ce que** l'on incorpore aux masses de moulage de PVC des particules de caoutchouc acrylique enrobées selon les revendications 7 ou 8.
